# EUROPÄISCHE PATENTSCHRIFT

(11) **EP 2 099 617 B1**
(45) Veröffentlichungstag und Bekanntmachung des Hinweises auf die Patenterteilung: **18.07.2012**
(21) Anmeldenummer: 07846810.5
(22) Anmeldetag: 24.11.2007
(51) Int. Cl.: B60P 3/00, B60G 3/01, B62D 7/02, B62D 7/04, B62D 61/10

(54) **FAHRZEUG**
VEHICLE
VÉHICULE

(30) Priorität: 07.12.2006 DE 102006058037
(43) Veröffentlichungstag der Anmeldung: 16.09.2009
(73) Patentinhaber: Goldhofer Aktiengesellschaft, 87700 Memmingen (DE)
(72) Erfinder: MERKEL, Felix, 87700 Memmingen (DE)
(74) Vertreter: Lemke, Jörg-Michael
(86) Internationale Anmeldenummer: PCT/EP2007/010239
(87) Internationale Veröffentlichungsnummer: WO 2008/067926

(56) Entgegenhaltungen:
- EP-A- 1 122 151
- EP-A- 1 577 159
- EP-A- 1 580 100
- WO-A-2005/056308
- CH-A5- 693 751
- DE-U1- 29 724 805
- US-B1- 6 311 795

## Beschreibung

Die Erfindung betrifft ein Fahrzeug mit Fahrachsen und mechanischer und/oder elektrisch/elektronischer Steuerung, insbesondere als vielweggelenkter Selbstfahrer, wobei an jeder Fahrachse an den beiden Längsseiten des Fahrzeugs jeweils ein Drehgestell mit Rädern und mit einer im wesentlichen vertikalen Mittelachse einem am Fahrzeug um eine zentrische und im wesentlichen vertikale Lenkdrehachse drehbar gelagerten Drehteller zugeordnet und an demselben starr befestigt ist, und die genannte Steuerung für eine jeweils erforderliche Dreheinstellung der Lenkdrehachsen durch Verdrehen der Drehteller während der Fahrt sorgt.

Derartige Fahrzeuge bestehen in der Regel aus einem sogenannten "Power-Pack", d. h. einem Modul mit einer Krafteinheit aus Motor und Pumpe bzw. mit einem Diesel-PumpenAggregat, sowie mit einer Steuereinheit und gegebenenfalls weiteren in Längs- und/oder Querrichtung angeschlossenen Modulen zur Bildung von äußerst flexiblen und wirtschaftlichen Transportsystemen zur Lösung aller Transportaufgaben im Nutzlastbereich von etwa 70 t bis über 10000 t. Zusätzliche Komponenten wie Schwanenhälse, Zugeinrichtungen, Ladebrücken, Langmaterialeinrichtungen etc. ermöglichen eine optimale Anpassung an die Anforderungen der jeweiligen Ladung und Transportstrecke. Die Steuerung erfolgt über die genannten Drehgestelle mit Rädern, die jeweils einen Hydromotor für den Antrieb besitzen können.

Bei einem bekannten Fahrzeug dieser Bauart (Modulare Schwerlastfahrzeuge, Goldhofer AG, 87700 Memmingen, Mai 2004; DE 200 04 167 U1) sind die jeweiligen Lenkdrehachsen der Drehgestelle am jeweiligen Fahrzeug bzw. Modul ortsfest angeordnet, d. h. die Lenkdrehachsen sind mit den Drehachsen der Drehgestelle koinzident, womit die jeweilige Spurweite und die Fahrzeug- bzw. Modulbreite vorgegeben sind. Dabei haben sich zwei Breiten eingebürgert: einerseits eine Breite von 3000 mm und andererseits eine Breite von 2430 mm. Die erstgenannte Breite ist aus Gründen der Aufladefähigkeit und Kippstabilität an sich zu bevorzugen, die zweitgenannte Breite ist jedoch dadurch von Vorteil, dass Fahrzeuge mit dieser Breite wegen der international genormten Größen der schiffbaren Container leichter verschifft werden können. Üblicherweise erfolgt die Verschiffung auf Transportplattfonmen in Form sogenannter "Open Tops" bzw. "Flat Racks", deren Breite sich nach der genormten Containerbreite richtet, nämlich einer Breite von 2430 mm. Breitere Fahrzeuge bzw. Module, z. B. solche mit der erwähnten Breite von 3000 mm, erfordern somit einen größeren Aufwand bei der Verschiffung infolge des Bedarfs an speziell ausgebildeten Transportplanformen für dieselben.

Die der Erfindung zugrunde liegende Aufgabe wird darin gesehen, ein Fahrzeug der eingangs erwähnten Bauart zu schaffen, das einerseits über die zu bevorzugende Fahrzeugbreite bzw. Spurweite von 3000 mm verfügt, andererseits jedoch auf Transportplattformen mit der üblichen Containerbreite von 2430 mm transportiert und z. B. verschifft werden kann, ganz abgesehen davon, dass es auch mit einer Fahrzeugbreite von 2430 mm eingesetzt werden kann. Es versteht sich, dass auch anderweitige Abmessungen der Fahrzeugbreite ermöglicht werden sollen.

Diese Aufgabe wird erfindungsgemäß dadurch gelöst, dass die vertikalen Mittelachsen der beiden Drehgestelle einer Fahrachse jeweils einander entgegengesetzt um einen gleichen Längenbetrag exzentrisch gegenüber den zentrischen Lenkdrehachsen der Drehteller angeordnet sind, so dass bei zueinander entgegengesetzter Verdrehung der Drehteller um 180 Grad um deren zentrische Lenkdrehachsen die Drehgestelle dieser Fahrachse mit ihren Rädern aus einer minimalen Breite, bei der die Mittelachsen der Drehgestelle einander weitestmöglich angenähert sind, maximal um das jeweils Zweifache des genannten Längenbetrags zur jeweiligen Längsseite des Moduls hin und wieder zurück verschwenkbar sind, wobei dieses Zweifache jeweils dem doppelten radialen Abstand zwischen einer Lenkdrehachse eines Drehtellers einerseits und der Mittelachse des zugehörigen Drehgestells andererseits entspricht, derart, dass eine Verbreiterung der jeweiligen Fahrachse oder auch des gesamten modularen Fahrzeugs auf eine maximale Breite und wieder erneut eine Verschmälerung auf die minimale Breite herbeiführbar ist.

Es versteht sich, dass das erfindungsgemäße Fahrzeug mit beiden Breiten voll einsatzfähig und zum Transport jeweils fast der gleichen Last fähig ist.

Die Erfindung ermöglicht einen Versatz der Mittelachsen einer Fahrachse aus einer Stellung mit minimalem Abstand voneinander, in der das Fahrzeug bzw. das Modul seine minimale Breite aufweist, z. B. 2430 mm, in eine Stellung mit maximalem Abstand der Mittelachsen voneinander, in der das Fahrzeug bzw. das Modul seine maximale Breite aufweist, z. B. 3000 mm, jeweils durch Versatz der Mittelachsen quer zur Fahrzeuglängsachse nach außen und natürlich bei Bedarf auch wieder zurück nach innen.

Durch einen solchen Versatz der Lenkdrehachsen ändert sich zwar die Lenkgeometrie, diese Änderung ist jedoch nur geringfügig und lässt sich sehr einfach im Lenkprogramm berücksichtigen, da jeweils nur ein Parameter zu ändern ist, nämlich die Stellung bzw. Lage der jeweiligen Mittelachse relativ zum Fahrzeug bzw. Modul.

Die Erfindung ermöglicht durch die entstehende Vergrößerung des möglichen Schwenkradius jedes Drehgestells auch den Einsatz größerer Reifen, was die Möglichkeit zur Erhöhung der jeweiligen Achslast ergibt, zusätzlich zu der bereits erwähnten Erhöhung der Kippstabilität.

Dabei versteht es sich, dass die vorgegebene Breite der Ladefläche des Fahrzeugs bzw. Moduls sich natürlich nicht ändern kann, z. B. bleibt eine vorgegebene Breite derselben von 2430 mm unverändert erhalten. Die Verbreiterung wird allein durch die nach außen versetzte Lage der Mittelachsen herbeigeführt, derart, dass die Außenreifen der Drehgestelle über die seitlichen Begrenzungen der Fahrzeug- bzw. Modulladefläche vorstehen. Die Breite dieser Ladefläche wird dadurch irrelevant, die Einsatzmöglichkeiten entsprechen nämlich denjenigen eines Fahrzeugs bzw. eines Moduls mit z. B. einer Breite von 3000 mm, was bedeutet, dass die Tragfähigkeit gegenüber einem herkömmlichen Modul mit 2430 mm Breite entsprechend erhöht ist

Zweckmäßig weist jeder Drehteller einen Zahnkranz auf und ist mittels einer am Fahrzeug bzw. am Modul angeordneten antreibbaren Schnecke um 360 Grad verdrehbar. Statt der Schnecke, die selbsthemmend sein kann, ist beispielsweise auch eine Zahnstange verwendbar.

Die Erfindung gelangt vor allem bei modularen Schwerfastfahrzeugen zur Ausführung. Dabei kann jedes Modul mit bis zu sechs Fahrachsen ausgerüstet sein.

Die Erfindung ist im Folgenden anhand eines in der Zeichnung dargestellten Ausführungsbeispiels näher erläutert.

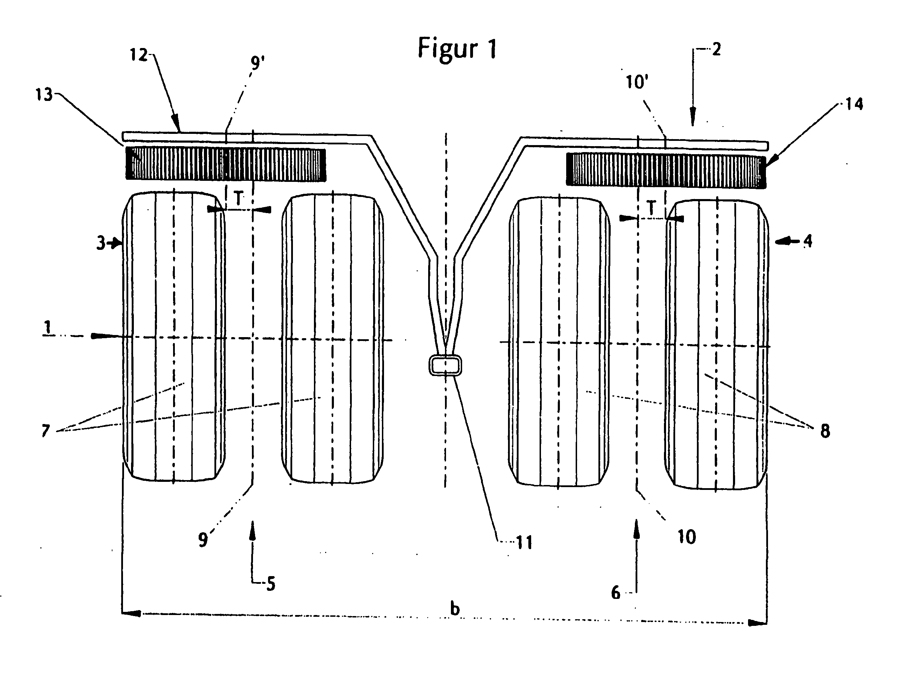

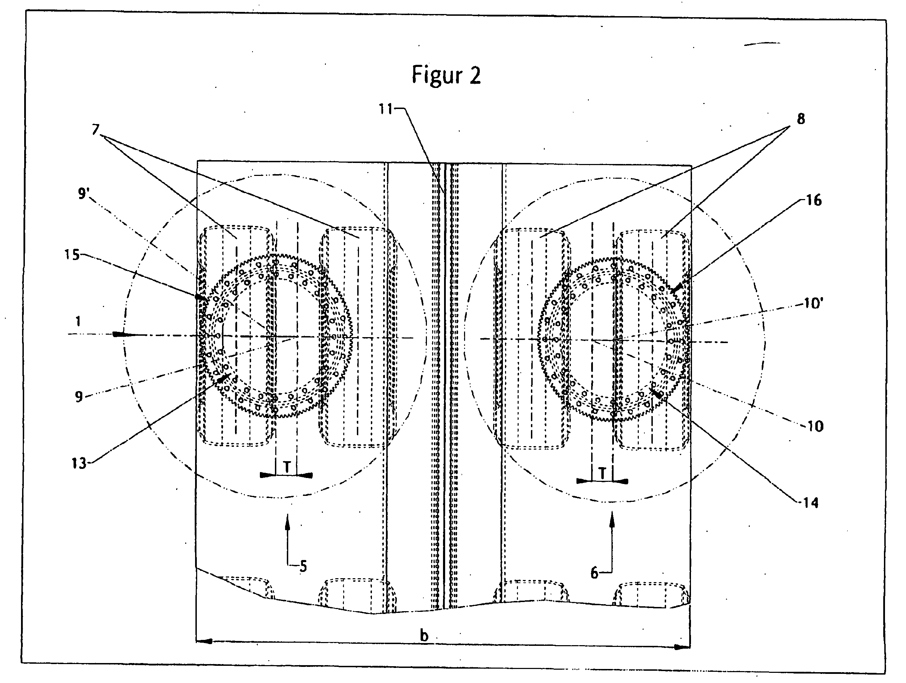

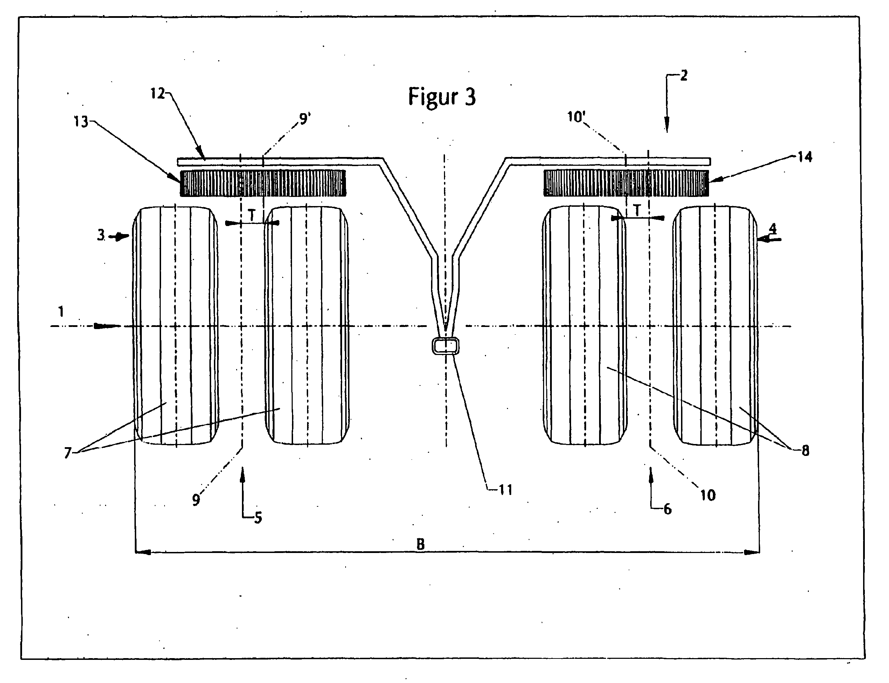

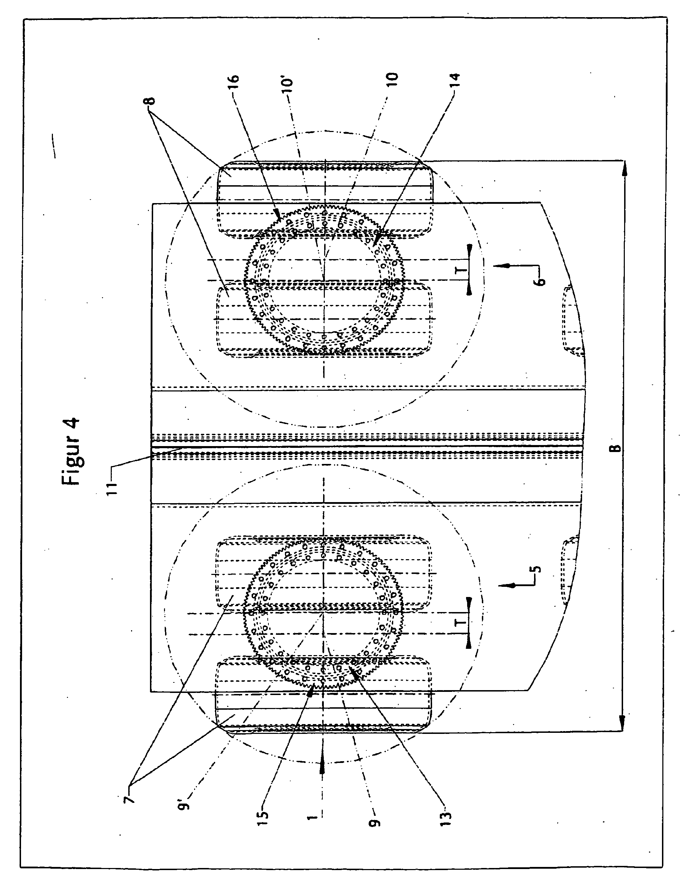

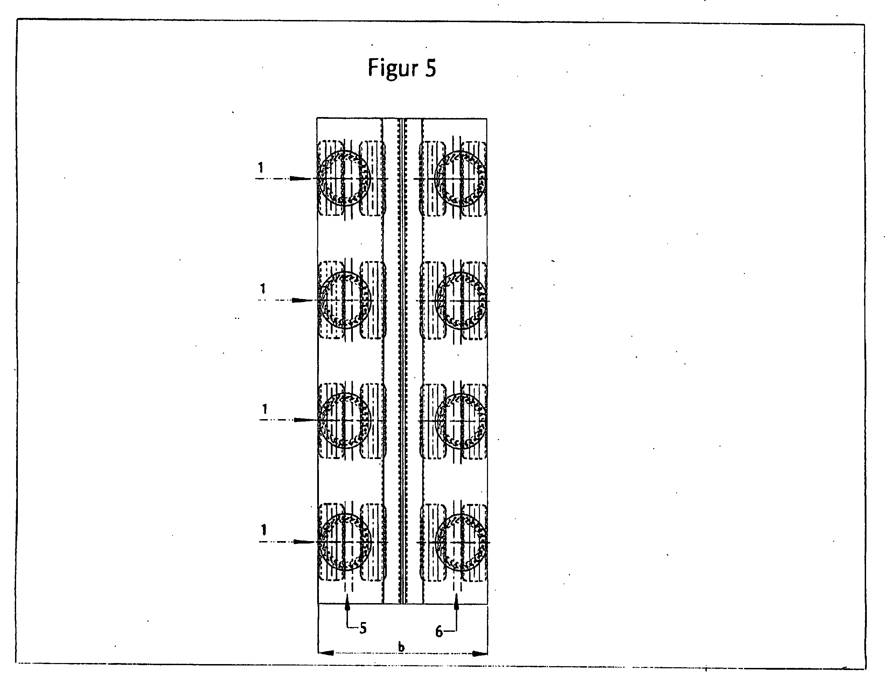

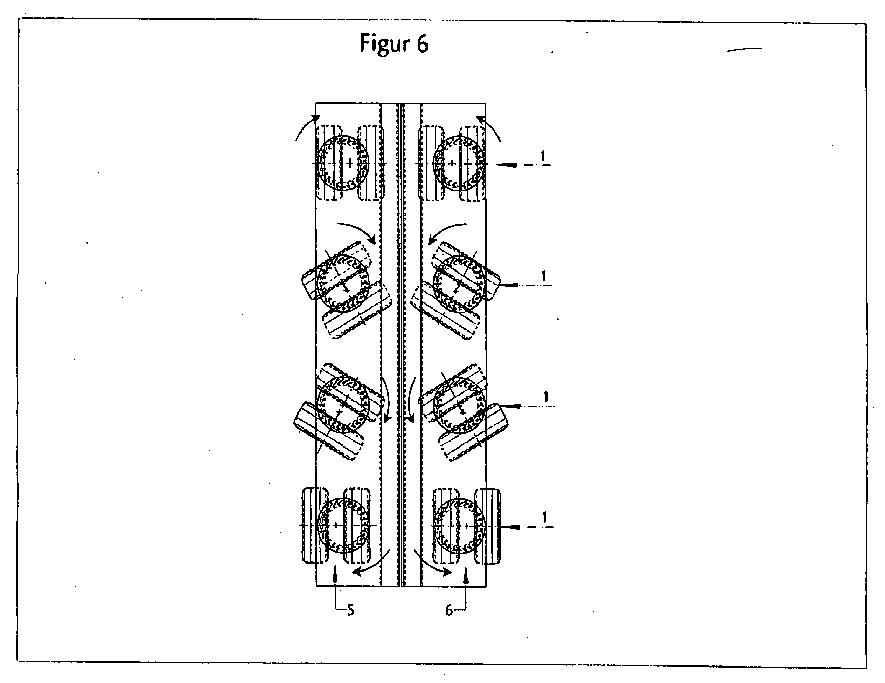

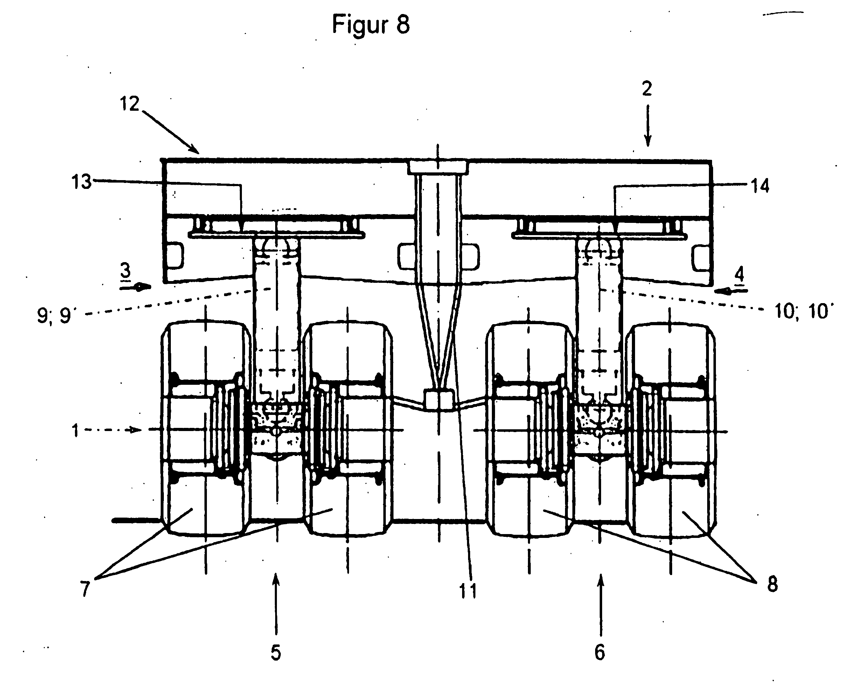

Es zeigt:
Fig.1
   eine schematische Ansicht einer Ausführungsform einer Fahrachse eines erfindungsgemäßen Fahrzeugs bzw. Moduls in Richtung von dessen Längsachse, wobei sich dessen beide Drehgestelle in minimalem Abstand voneinander befinden;
Fig. 2
   eine Draufsicht auf die Fahrachse nach Fig. 1;
Fig. 3
   eine der Fig. 1 entsprechende Ansicht, wobei sich die beiden Drehgestelle in maximalem Abstand voneinander befinden;
Fig. 4
   eine Draufsicht auf die Fahrachse nach Fig. 3;
Fig. 5
   eine der Fig. 2 entsprechende Draufsicht auf ein Modul mit vier Fahrachsen und Stellungen der Drehgestelle, die denjenigen in den Fig. 1 und 2 gleich sind;
Fig. 6
   eine der Fig. 5 entsprechende Draufsicht mit unterschiedlich verschwenkten Stellungen der Drehgestelle;
Fig. 7
   eine den Fig. 5 und 6 entsprechende Draufsicht mit Stellungen der Drehgestelle, die denjenigen in den Fig. 3 und 4 gleich sind;
Fig. 8
   eine den Fig. 1 und 3 entsprechende Ansicht einer Fahrachse nach dem Stand der Technik;
Fig. 9
   die Fahrachse nach Fig. 8 in einer schematischen Ansicht entsprechend den Fig. 1 und 3.

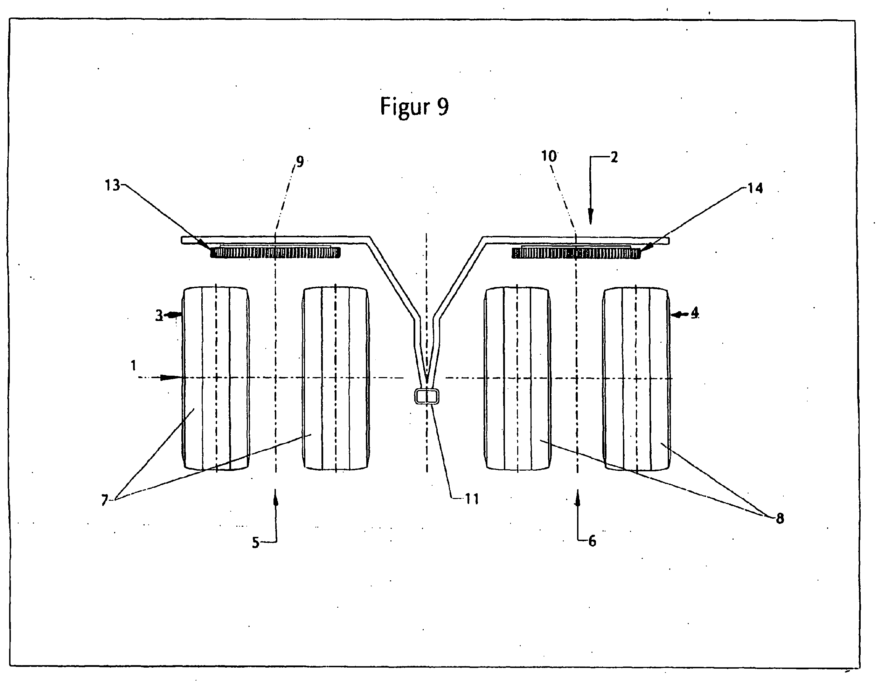

Die Fig. 8 und 9 zeigen eine Ansicht einer Fahrachse 1 eines Fahrzeugmoduls 2 der eingangs genannten Bauart nach dem Stand der Technik in Fahrtrichtung, wobei an den beiden Längsseiten 3 und 4 dieses Moduls 2 jeweils ein Drehgestell 5 und 6 mit Rädern 7 und 8 und Lenkdrehachsen 9' und 10' zugeordnet ist. Ein im Querschnitt sichtbarer Längsträger 11 trägt zur Stabilität der Ladefläche 12 des Moduls 2 bei, unter der die Drehgestelle 5 und 6 gelagert sind. Die vertikalen Mittelachsen 9 und 10 und die zentrischen vertikalen Lenkdrehachsen 9' und 10' der Drehteller 13 und 14 sind hier koinzident, d. h. die Lenkdrehachse 9' und die Mittelachse 9 einerseits und die Lenkdrehachse 10' und die Mittelachse 1 0 andererseits der Drehgestelle 5 und 6 sind jeweils identisch.

In den Fig. 1 und 2 ist nun die Erfindung dargestellt, wobei gleiche Teile mit den gleichen Bezugszeichen versehen wurden, und zwar in einer ersten Stellung der Drehgestelle 5 und 6 mit einem minimalen Abstand voneinander. Dabei sind die vertikalen Mittelachsen 9 und 10 der beiden Drehgestelle 5 und 6 der Fahrachse 1 jeweils einander entgegengesetzt um einen gleichen Längenbetrag T exzentrisch gegenüber den zentrischen Lenkdrehachsen 9' und 10' der Drehteller 13 und 14 angeordnet, so dass bei Verdrehung der Drehteller 13 und 14 um 180 Grad um deren zentrische Lenkdrehachsen 9' und 10' die Drehgestelle 5 und 6 dieser Fahrachse 1 mit ihren Rädern 7 und 8 aus einer minimalen Breite b gemäß Fig.1 und 2, bei der die Mittelachsen 9 und 10 der Drehgestelle 5 und 6 einander weitestmöglich angenähert sind, maximal um das jeweils Zweifache des Längenbetrags T zur jeweiligen Längsseite 3 oder 4 des Moduls 2 hin verschwenkbar sind, wobei dieses Zweifache dem doppelten radialen Abstand zwischen einer Lenkdrehachse 9' oder 10' eines Drehtellers 13 oder 14 einerseits und der Mittelachse des zugehörigen Drehgestells andererseits entspricht, derart, dass eine Verbreiterung der Fahrachse bzw. des gesamten modularen Fahrzeugs auf eine maximale Breite B = b + 4T gemäß Fig. 3 und 4 herbeiführbar ist.

Es versteht sich, dass nach einer stattgehabten Verbreiterung auf die maximale Breite B bei Bedarf auch wieder erneut eine Verschmälerung auf die minimale Breite b durchführbar ist.

Die Draufsicht gemäß Fig. 2 deutet dabei die zweckmäßig jeweils vorgesehenen Zahnkränze 15 und 16 für das Verdrehen der Drehteller 13 und 14 um die Lenkdrehachsen 9' und 10' an, während die zugehörigen Antriebsschnecken oder auch z. B. Zahnstangen der Übersicht halber weggelassen worden sind, wie auch die Ladefläche 12.

Die Fig. 5 bis 7 zeigen schematisch jeweils mit vier Fahrachsen 1 ausgerüstete Module für nicht gezeigte Schwerlastfahrzeuge, und zwar mit den folgenden Stellungen der Drehgestelle 5 und 6:

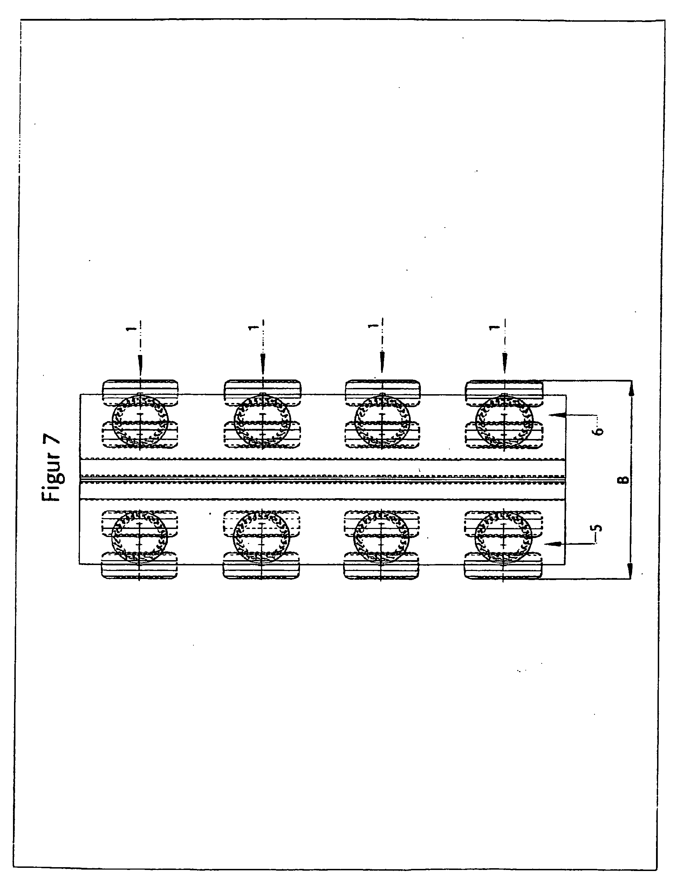

In Fig. 5 sind sämtliche Fahrachsen 1 mit Drehgestellen 5 und 6 versehen, die sich im Minimalabstand b voneinander befinden, entsprechend den Stellungen in den Fig. 1 und 2. In Fig. 6 befinden sich nur noch die Drehgestelle 5 und 6 der dort obersten Fahrachse 1 in den aus Fig. 5 hervorgehenden Stellungen, mit der minimalen Breite b, die drei darunter angeordneten Fahrachsen 1 besitzen jeweils Drehgestelle 5 und 6, die in Pfeilrichtung um 60 Grad, 120 Grad und 180 Grad einander entgegengesetzt verschwenkt worden sind, derart, dass die Drehgestelle 5 und 6 der untersten Fahrachse die maximale Breite B aufweisen. Fig. 7 schließlich zeigt die angestrebte Stellung gemäß den Fig. 3 und 4, in der sämtliche Drehgestelle 5 und 6 um 180 Grad verschwenkt wurden und die maximale Breite B des Moduls 2 erreicht haben.

## Patentansprüche

1. Fahrzeug (2) mit Fahrachsen (1) und mechanischer und/oder elektrisch/elektronischer Steuerung, insbesondere als vielweggelenkter Selbstfahrer, wobei an jeder Fahrachse (1) an den beiden Längsseiten (3, 4) des Fahrzeugs (2) jeweils ein Drehgestell (5; 6) mit Rädern (7; 8) und mit einer im wesentlichen vertikalen Mittelachse (9; 10) einem am Fahrzeug (2) um eine zentrische und im wesentlichen vertikale Lenkdrehachse (9'; 10') drehbar gelagerten Drehteller (13; 14) zugeordnet und an demselben starr befestigt ist, und die genannte Steuerung für eine jeweils erforderliche Dreheinstellung der Lenkdrehachsen (9'; 10') durch Verdrehen der Drehteller (13; 14) während der Fahrt sorgt,
**dadurch gekennzeichnet,**
**dass**
die vertikalen Mittelachsen (9; 10) der beiden Drehgestelle (5; 6) einer Fahrachse (1) jeweils einander entgegengesetzt um einen gleichen Längenbetrag (T) exzentrisch gegenüber den zentrischen Lenkdrehachsen (9'; 10') der Drehteller (13; 14) angeordnet sind, so dass bei zueinander entgegengesetzter Verdrehung der Drehteller (13; 14) um 180 Grad um deren zentrische Lenkdrehachsen (9'; 10') die Drehgestelle (5; 6) dieser Fahrachse (1) mit ihren Rädern (7; 8) aus einer minimalen Breite (b), bei der die Mittelachsen (9; 10) der Drehgestelle (5; 6) einander weitestmöglich angenähert sind, maximal um das jeweils Zweifache des genannten Längenbetrags zur jeweiligen Längsseite (3; 4) des Moduls (2) hin und zurück verschwenkbar sind, wobei dieses Zweifache jeweils dem doppelten radialen Abstand zwischen einer Lenkdrehachse (9' oder 10') eines Drehtellers (13 oder 14) einerseits und der Mittelachse (9 oder 10) des zugehörigen Drehgestells (5; 6) andererseits entspricht, derart, dass eine Verbreiterung der jeweiligen Fahrachse (1) oder auch des gesamten Fahrzeugs (2) auf eine maximale Breite (B = b + 4T) und wieder erneut eine Verschmälerung auf die minimale Breite (b) herbeiführbar ist.

2. Fahrzeug nach Anspruch 1,
**dadurch gekennzeichnet,**
**dass**
das Fahrzeug (2) aus einem Modul mit einer Krafteinheit aus Motor, Pumpe und Steuereinheit und weiteren in Längs- und/oder Querrichtung durch Kopplung angeschlossenen Modulen zur Bildung eines Transportsystems besteht.

3. Fahrzeug nach Anspruch 1 oder 2,
**dadurch gekennzeichnet,**
**dass**
jeder Drehteller (13; 14) einen Zahnkranz aufweist und mittels einer am Fahrzeug (2) bzw. am Modul angeordneten antreibbaren Schnecke über 360 Grad um die Lenkdrehachse (9'; 10') verdrehbar ist.

4. Fahrzeug nach Anspruch 1, 2 oder 3,
**dadurch gekennzeichnet,**
**dass**
bei der Lenkung durch ein Verdrehen der Drehteller (13; 14) ein um die vorhandene Exzentrizität vergrößerter Schwenkradius jedes Drehgestells (5; 6) vorhanden ist.

5. Fahrzeug nach Anspruch 1, 2, 3 oder 4,
**gekennzeichnet durch**
den Einsatz von Reifen größerer Breite und/oder größeren Durchmessers.

6. Fahrzeug nach Anspruch 2,
**dadurch gekennzeichnet,**
**dass**
das Fahrzeug (2) ein modulares Schwerlastfahrzeug ist.

7. Fahrzeug nach Anspruch 1, 2 oder 6,
**dadurch gekennzeichnet,**
**dass**
das Fahrzeug (2) bzw. das Modul mit bis zu sechs Fahrachsen (1) ausgerüstet ist.

## Claims

1. A vehicle (2) with drive axles (1) and mechanical and/or electrical/electronic control, particularly as multiply steerable self-propelled unit, wherein to each respective drive axle (1) on both lateral sides (3, 4) of the vehicle (2) a rotating support (5; 6) with wheels (7; 8) and with a substantially vertical central axis (9; 10) is associated and is immovably affixed to a turntable (13; 14) which is rotatably mounted on the vehicle around a central and essentially vertical rotatable steering axis (9'; 10'), and the aforementioned control arranges for the respectively required rotational setting of the rotational steering axis (9'; 10') by rotating the turntables (13; 14) during travel,
**characterized in that**
the vertical central axles (9; 10) of both rotating supports (5; 6) of one drive axle (1) are each arranged eccentrically opposite to one another by the same lateral value (T) with regard to the central rotational steering axis (9'; 10') of the turntables (13; 14), so that by rotating the turntables (13; 14) by 180 degrees opposite to one another around their central rotational steering axis (9'; 10'), the rotating supports (5; 6) of this drive axis (1) can be pivoted back and forth with their wheels (7; 8) to each lateral side (3; 4) of the module (2), from a minimum width (b) in which the central axes (9; 10) of the rotating supports (5; 6) approach each other as much as possible, each by at most twice the above mentioned length value, whereby this corresponds to each doubled radial separation between one rotational steering axis (9' or 10') of one turntable (13 or 14) on the one side and the central axis (9 or 10) of the appertaining rotating support (5; 6) on the other side, in such a manner that a widening of the respective drive axles (1) or of the entire vehicle (2) to a maximum width (B = b + 4T) and again a renewed reduction to the minimum width (b) can be accomplished.

2. The vehicle according to claim 1,
**characterized in that**
the vehicle (2) comprises a module with a power unit consisting of motor, pump, and control unit, and additional modules connected by coupling in lengthwise or perpendicular direction to form a transportation system.

3. The vehicle according to claim 1 or 2,
**characterized in that**
each turntables (13; 14) comprises a crown gear, and can be rotated by 360 degrees around the rotational steering axis (9'; 10') by means of a powered drive screw arranged on the vehicle (2) or on the module.

4. The vehicle according to claim 1, 2, or 3,
**characterized in that**
in steering by a rotation of the turntables (13; 14), a pivoting radius increased by the available eccentricity of each rotating support (5; 6) can be obtained.

5. The vehicle according to claim 1, 2, 3, or 4,
**characterized by**
the use of tires of larger width and/or larger diameter.

6. The vehicle according to claim 2,
**characterized in that**
the vehicle (2) is a modular heavy load transport vehicle.

7. The vehicle according to claim 1, 2, or 6,
**characterized in that**
the vehicle (2) or the module is equipped with up to six steering axles (1).

## Revendications

1. Véhicule aves des essieux de roulement (1) et une commande mécanique et/ou électrique/électronique, en particulier sous forme d'automoteur polyarticulé, à chaque essieu de roulement (1) sur chacune des deux longueurs (3, 4) du véhicule (2) un bogie (5 ; 6) respectif avec des roues (7 ; 8) et avec un axe centré (9 ; 10) sensiblement vertical est associé avec un plateau tournant (13 ; 14) monté contre le véhicule (2) de manière à tourner autour d'un axe de rotation de direction (9' ; 10') central sensiblement vertical, et accouplé de manière rigide à celui-ci, et la commande susmentionnée assurant un réglage de rotation exigé pour chaque axe de rotation de direction (9' ; 10') par rotation du plateau tournant (13 ; 14) pendant la conduite,
**caractérisé**
**en ce que** les axes centraux verticaux (9 ; 10) des deux bogies (5 ; 6) d'un essieu de roulement (1) sont excentrés, symétriquement l'un par rapport à l'autre, d'une même valeur de longueur (T) par rapport aux axes de rotation de direction centrés (9' ; 10') des plateaux tournants (13 ; 14), si bien qu'en cas de rotation en sens contraires des plateaux tournants (13 ; 14), de 180 degrés autour de leurs axes de rotation de direction centrés (9' ; 10'), les bogies (5 ; 6) dudit essieu de roulement (1) peuvent être pivotés en va-et-vient avec leurs roues (7 ; 8), au maximum du double de la valeur de longueur susmentionnée, depuis une largeur minimale (b), où les axes centraux (9 ; 10) des bogies (5 ; 6) sont rapprochés le plus possible l'un de l'autre, vers la longueur (3 ; 4) correspondante du module (2), ledit double correspondant à deux fois l'espacement radial entre un axe de rotation de direction (9' ou 10') d'un plateau tournant (13 ou 14), d'une part, et l'axe central (9 ou 10) du bogie correspondant (5; 6), d'autre part, de manière à pouvoir produire un élargissement de chaque essieu de roulement (1) ou aussi de l'ensemble du véhicule (2) vers une largeur maximale (B = b + 4T), et à nouveau un rétrécissement à la largeur minimale (b).

2. Véhicule selon la revendication 1,
**caractérisé**
**en ce que** ledit véhicule (2) est composé d'un module avec une unité de puissance constituée d'un moteur, d'une pompe et d'une unité de commande, et d'autres modules raccordés par accouplement en direction longitudinale et/ou transversale pour former un système de transport.

3. Véhicule selon la revendication 1 ou 2,
**caractérisé**
**en ce que** chaque plateau tournant (13 ; 14) comprend une couronne dentée et est rotatif sur 360 degrés autour de l'axe de rotation de direction (9' ; 10'), au moyen d'une vis sans fin entraînable disposée sur le véhicule (2) ou sur le module.

4. Véhicule selon la revendication 1, 2 ou 3,
**caractérisé**
**en ce qu'**en cas de braquage par rotation des plateaux tournants (13 ; 14), il est présenté un rayon de pivotement agrandi de l'excentricité existante pour chaque bogie (5 ; 6) .

5. Véhicule selon la revendication 1, 2, 3 ou 4,
**caractérisé**
**par** l'utilisation de pneus de grande largeur et/ou de grand diamètre.

6. Véhicule selon la revendication 2,
**caractérisé**
**en ce que** ledit véhicule (2) est un véhicule poids lourd modulaire.

7. Véhicule selon la revendication 1, 2 ou 6,
**caractérisé**
**en ce que** ledit véhicule (2) ou le module comportent jusqu'à six essieux de roulement (1).
